# EUROPÄISCHE PATENTSCHRIFT

(11) **EP 3 460 207 B1**
(45) Veröffentlichungstag und Bekanntmachung des Hinweises auf die Patenterteilung: **04.11.2020**
(21) Anmeldenummer: 17191999.6
(22) Anmeldetag: 20.09.2017
(51) Int. Cl.: F01K 23/10, F22B 1/30

(54) **DAMPFERZEUGEREINHEIT MIT POWER-TO-HEAT-FUNKTION**
STEAM GENERATOR UNIT WITH POWER TO HEAT FUNCTION
UNITÉ FORMANT GÉNÉRATEUR DE VAPEUR POURVUE D'UNE FONCTION D'ÉLECTROTHERMIE

(43) Veröffentlichungstag der Anmeldung: 27.03.2019
(73) Patentinhaber: E.ON Energy Projects GmbH, 80992 München (DE)
(72) Erfinder: Heß, Rudolf, 84076 Pfeffenhausen (DE); Kraus, Markus, 81375 München (DE)
(74) Vertreter: Glawe, Delfs, Moll

(56) Entgegenhaltungen:
- VELDE Boilers and Plants: "Electrode boilers", , 4. Juli 2017 (2017-07-04), XP002779441, Gefunden im Internet: URL:https://web.archive.org/web/2017070422 0050/http://www.velde-group.de/en/products -and-services/boiler-constructions/electro de-boilers/http://www.velde-group.de/en/pr oducts-and-services/boiler-constructions/e lectrode-boilers/ [gefunden am 2018-03-21]
- PARAT: "PARAT IEH: Hich Electrode boiler for Steam and Hot water", , 17. September 2017 (2017-09-17), XP002779442, Gefunden im Internet: URL:https://web.archive.org/web/2017091722 3710/http://www.parat.no/en/products/indus try/parat-ieh-high-voltage-electrode-boile r/ [gefunden am 2018-03-21]

## Beschreibung

Die Erfindung betrifft eine Dampferzeugereinheit mit wahlweise zuschaltbarer Power-to-heat-Funktion sowie ein Verfahren zum Betrieb einer entsprechenden Dampferzeugereinheit.

Dampferzeuger, bei denen aus Wasser unter Wärmezufuhr Wasserdampf erzeugt wird, werden in unterschiedlichen technischen Bereichen eingesetzt, u.a. auch bei verschiedenen Arten von Dampfkraftwerken sowie Gas- und Dampfturbinen-Kraftwerken (GuD-Kraftwerken).

Bei Dampfkraftwerken werden zumeist die aus Verbrennungsprozessen entstehenden heißen Rauchgase zur Dampferzeugung genutzt. Bei GuD-Kraftwerken, bei denen eine Gasturbine einen ersten Generator zur Erzeugung elektrischer Leistung antreibt, wird die in Form des Gasturbinen-Abgases zur Verfügung stehende Abwärme zur Erzeugung von Dampf genutzt, mit dem eine Dampfturbine betrieben wird, die einen zweiten Generator zur Erzeugung elektrischer Leistung antreibt.

Auch ist bekannt, den bei einem Dampfkraftwerk oder GuD-Kraftwerk aus der Dampfturbine austretenden Dampf weiter zu nutzen, um bspw. Wasser für die Fernwärme zu erwärmen. Bei entsprechenden Kraft-Wärme-Kopplungen (KWK) wird neben elektrischer Energie also auch noch thermische Energie nutzbar bereitgestellt. Der Wirkungsgrad eines Kraftwerks mit Kraft-Wärme-Kopplung bezogen auf die elektrische Energieerzeugung wird dabei zwar reduziert, bei der Betrachtung sowohl der elektrischen als auch der thermischen Energieerzeugung ist aber regelmäßig ein erhöhter Gesamtwirkungsgrad erreichbar.

Die von einem bekannten KWK-Kraftwerk erzeugte Wärme ist aufgrund der Nutzung der Abwärme aus der Stromerzeugung als Wärmequelle in weiten Teilen abhängig von der erzeugten elektrischen Leistung. So wird ein KWK-Kraftwerk im Grundsatz nur in einem von der erzeugten elektrischen Energie abhängigen Maße thermische Energie bereitstellen können.

Beispielsweise durch den Einsatz von Zusatzfeuerungen bei GuD-KWK-Kraftwerken, mit denen die von der Gasturbine kommenden heißen Abgase weiter erhitzt werden können, ist es zwar möglich, bei Bedarf mehr Wasserdampf bereitzustellen als sich allein aus der Erzeugung der elektrischen Energie ergeben würde, allerdings wird hierfür zusätzlich fossiler Brennstoff verbrannt. Außerdem ist die durch die Zusatzfeuerung erzeugte zusätzliche Wärmeleistung bzw. Dampferzeugung nur in Grenzen steuerbar, sodass zusammen mit der Zusatzbefeuerung regelmäßig auch eine Wassereinspritzung zum Abkühlen von ggf. überhitztem Dampf vorgesehen sein muss.

Es ist bekannt, dass die Erzeugung elektrischer Energie durch KWK-Kraftwerke insbesondere dann zurückgefahren wird, wenn es keinen Abnehmer für die elektrische Energie gibt, bspw. weil der Momentanverbrauch aller an ein Versorgungsnetz angeschlossenen elektrischen Verbraucher vollständig durch andere Kraftwerke bzw. durch regenerative Erzeugungsanlagen abgedeckt ist, es bei einem nicht-reduzierten Weiterbetrieb eines KWK-Kraftwerks also ein Überangebot elektrischer Energie gäbe. Im Stand der Technik wurde bereits vorgeschlagen, in solchen Situationen überschüssige elektrische Energie zu nutzen, um für die Wärmeabnehmer der KWK-Kraftwerke eine gewünschte Menge an Wärme bereitzustellen, falls die Abwärme aus der Stromerzeugung hierzu allein nicht ausreichend ist.

Dazu sind im Stand der Technik separate Kesseleinheiten bekannt, mit denen über elektrisch betriebene Heizelemente Wasserdampf oder Heißwasser erzeugt werden kann. Die so erzeugte Wärme kann zusammen mit dem mit der Abwärme aus der Stromerzeugungsanlage einem nachgeschalteten Wärmeverbraucher (bspw. einem Wärmetauscher für die Fernwärme) zugeführt werden. In den Dokumenten "VELDE Boilers and Plants: "Electrode boilers" und "PARAT: PARAT IEH: High Voltage Electrode boiler for Steam and Hot water" werden separate Zusatzboiler beschrieben.

Nachteilig an diesem Stand der Technik sind die hohen Investitionskosten für entsprechende Kesseleinheiten sowie der häufig nicht unerhebliche Energieverbrauch der Kesseleinheiten im Stand-by-Modus, also in Zeiten, in denen die Kesseleinheit keinen Wasserdampf erzeugt. Um - wie regelmäßig erforderlich - bei Bedarf auch kurzfristig Wasserdampf bereitstellen zu können, muss das in einer entsprechenden Kesseleinheit enthaltene Wasser nämlich auf einer Temperatur knapp unter der Siedetemperatur gehalten werden. Nur so kann sichergestellt werden, dass durch Einschalten der elektrisch betriebenen Heizelemente auch kurzfristig Wasserdampf zur Verfügung gestellt wird.

Aufgabe der vorliegenden Erfindung ist es, eine Dampferzeugereinheit mit wahlweise zuschaltbarer Power-to-heat-Funktion sowie ein Verfahren zu deren Betrieb zu schaffen, bei der die aus dem Stand der Technik bekannten Nachteile nicht mehr oder nur noch in verminderten Umfang auftreten.

Gelöst wird diese Aufgabe durch eine Dampferzeugereinheit gemäß dem Hauptanspruch sowie ein Verfahren gemäß dem nebengeordneten Anspruch 6. Vorteilhafte Weiterbildungen sind Gegenstand der abhängigen Ansprüche.

Demnach betrifft die Erfindung eine Dampferzeugereinheit mit wahlweise zuschaltbarer Power-to-heat-Funktion umfassend einen Dampfkessel mit Gasraum und Wasserraum zur Erzeugung von Wasserdampf mit Hilfe eines fluiden Heizmediums, wobei Wasser über einen ersten steuerbaren Speisewasseranschluss zugeführt wird und der Wasserdampf durch einen Dampfkesselauslass austritt, wobei eine Elektrodenverdampfereinheit mit wenigstens einer in einen jeweils einen Gas- und Wasserraum umfassenden Druckbehälter ragenden schaltbaren Heizelektrode vorgesehen ist, wobei jeweils die Gas- und Wasserräume von Dampfkessel und Elektrodenverdampfereinheit miteinander fluidverbunden sind, wobei die Fluidverbindung zwischen den beiden Wasserräumen durch ein Ventil steuerbar ist, der Gasraum der Elektrodenverdampfereinheit einen steuerbaren Auslass umfasst und die Elektrodenverdampfereinheit einen zweiten steuerbaren Speisewasseranschluss aufweist.

Weiterhin betrifft die Erfindung ein Verfahren zum Betrieb einer erfindungsgemäßen Dampferzeugereinheit mit Power-to-heat-Funktion, wobei
- im Falle einer Dampferzeugung ohne Power-to-heat-Funktion die Speisewasserzufuhr zum Dampfkessel über den Speisewasseranschluss der Elektrodenverdampfereinheit und die Fluidverbindung zwischen den Wasserräumen des Dampfkessels und der Elektrodenverdampfereinheit erfolgt und der Auslass der Elektrodenverdampfereinheit derart eingestellt ist, dass ein Teil des im Dampfkessel erzeugten Wasserdampfes durch den Gasraum der Elektrodenverdampfereinheit zum Auslass gelangt; und
- im Falle einer Dampferzeugung mit Power-to-heat-Funktion sowohl die Fluidverbindung zwischen den Wasserräumen des Dampfkessels und der Elektrodenverdampfereinheit als auch der Auslass der Elektrodenverdampfereinheit geschlossen sind und das Wasserniveau in der Elektrodenverdampfereinheit über den Speisewasseranschluss derart eingestellt wird, dass die wenigstens eine Heizelektrode zur Erzeugung von Wasserdampf in den Wasserraum der Elektrodenverdampfereinheit ragt.

Zunächst werden einige im Zusammenhang mit der Erfindung verwendete Begriffe erläutert.

Mit "Gasraum" und "Wasserraum" sind die während der Dampferzeugung in einem Kessel bzw. Druckbehälter einerseits durch den gasförmigen Wasserdampf bzw. ein gasförmiges Wasserdampf-Luft-Gemisch, andererseits durch das flüssige Wasser eingenommene Raum im Innern des Kessels bzw. Druckbehälters bezeichnet. Die Grenze zwischen Gas- und Wasserraum mag sich während der Dampferzeugung aufgrund diverser Einflüsse oder durch bewusste Veränderung der Betriebsparameter zwar in einem gewissen Rahmen verschieben. Es lassen sich aber ohne weiteres Bereiche in einem Kessel bzw. Druckbehälter definieren, die bei ordnungsgemäßem Betrieb des Kessels bzw. Druckbehälters zu Dampferzeugung auch in unterschiedlichen Betriebszuständen eindeutig dem Gas- bzw. dem Wasserraum zuordnen lassen.

Komponenten gelten dann als "steuerbar", wenn sie über von einer Steuerungseinrichtung stammende Steuersignale gesteuert werden können. Eine manuell einstellbare Komponente (bspw. über ein Handrad) ist hingegen nicht steuerbar im Sinne der vorliegenden Erfindung.

Eine Komponente ist "schaltbar", wenn sie sich - vorzugsweise über von einer Steuerungseinrichtung stammenden Steuersignalen - beliebig an- und abschalten lässt.

Mit "Drosselventil" ist eine Einrichtung bezeichnet, mit der sich der freie Strömungsquerschnitt durch eine Leitung von einem Maximalwert bis auf null variieren lässt. Es ist bevorzugt, wenn der maximal einstellbare freie Strömungsquerschnitt eines Drosselventils im Wesentlichen dem Leitungsquerschnitt entspricht. In diesem Fall tritt bei einer entsprechenden Stellung des Ventils keine oder nur eine sehr geringe Drosselwirkung auf. Eine Reduzierung des freien Strömungsquerschnitts auf null entspricht einem Absperren der Leitung.

Die Erfindung hat erkannt, dass die erfindungsgemäße Anbindung einer Power-to-heat-Funktionseinheit unmittelbar an einen, Dampfkessel, der mit Hilfe eines fluiden Heizmediums (bspw. dem Abgas aus Verbrennungsprozessen) Wasserdampf erzeugt, gegenüber dem Stand der Technik deutliche Vorteile bringt. Neben der Einsparung einer zur Erreichung einer Power-to-Heat-Zusatzfunktion ansonsten erforderlichen, separaten elektrisch betriebenen Kesseleinheit lässt sich durch eine entsprechende Integration bzw. Anbindung ein energieeffizienter Stand-by-Betrieb erreichen. Auch lässt sich der elektrisch erzeugte Wasserdampf ausreichend gut regeln, dass auf eine Wassereinspritzung zum Abkühlen von ggf. überhitztem Dampf regelmäßig verzichtet werden kann.

Um diese Vorteile zu erreichen ist erfindungsgemäß vorgesehen, an einen an sich bekannten Dampfkessel, vorzugsweise einem Wasserrohrkessel, zur Erzeugung von Wasserdampf unter gasförmiger Wärmezufuhr (bspw. in Form von Abgasen aus Verbrennungsprozessen) eine Elektrodenverdampfereinheit nach dem Prinzip einer kommunizierenden Röhre anzubinden. Hierzu sind sowohl die Gasräume des Dampfkessels sowie des Druckbehälters der Elektrodenverdampfereinheit als auch die jeweiligen Wasserräume miteinander fluidverbunden. Die Verbindung der beiden Gasräume kann dabei dauerhaft bestehen, während die Verbindung der beiden Wasserräume wahlweise durch ein steuerbares Ventil verschlossen werden kann. Vorzugsweise lässt sich auch der Durchfluss durch die letztgenannte Fluidverbindung steuern, wozu das steuerbare Ventil bspw. als steuerbares Drosselventil ausgestaltet sein kann.

Die Elektrodenverdampfereinheit weist weiterhin einen über ein steuerbares Ventil steuerbaren Auslass, mit dem Luft oder Wasserdampf aus der Elektrodenverdampfereinheit an die Umgebung - ggf. über einen Ablassentspanner - abgegeben werden kann, auf. Bei dem Ventil kann es sich vorzugsweise um ein steuerbares Drosselventil handeln.

Es ist bevorzugt, wenn der steuerbare Auslass neben der Abgabe an die Umgebung wahlweise noch mit einer nachgeschalteten Anlage zur Nutzung des aus dem Auslass austretenden Wasserdampfes verbunden werden kann. Bei der nachgeschalteten Anlage kann es sich insbesondere auch um diejenige Anlage handeln, die mit dem Dampfkesselauslass verbunden ist. Um den durch den Auslass der Elektrodenverdampfereinheit austretenden Wasserdampf wahlweise an die Umgebung oder eine nachgeschaltete Anlage abgeben zu können, können bspw. zwei Auslässe jeweils mit steuerbaren Ventilen an der Elektrodenverdampfereinheit, eine mit einem Auslass der Elektrodenverdampfereinheit verbundene Abzweigung, an deren beiden Ausgängen jeweils ein steuerbares Ventil angeordnet ist oder ein mit einem Auslass der Elektrodenverdampfereinheit verbundenes steuerbares Ventil mit dahinterliegendem steuerbaren Zwei-Wege-Ventil vorgesehen sein. In sämtlichen, lediglich beispielhaft aufgeführten Ausführungen werden vorzugsweise steuerbare Drosselventile als steuerbare Ventile verwendet.

Es ist besonders bevorzugt, wenn der Strömungswiderstand durch den Auslass der Elektrodenverdampfereinheit - insbesondere bei einer wahlweisen Verbindung mit einer nachgeschalteten Anlage - steuerbar beliebig auf einen Wert größer oder kleiner als der Strömungswiderstand durch den Dampfkesselauslass einstellbar ist. Durch eine entsprechende Einstellbarkeit des Strömungswiderstandes lässt sich das später noch näher beschriebene, durch den Gasraum der Elektrodenverdampfereinheit geleitete Wasserdampfvolumen regeln. Eine entsprechende Steuerung des Strömungswiderstandes lässt sich bspw. durch ein geeignet ausgelegtes steuerbares Drosselventil erreichen.

Sowohl der Dampfkessel als auch die Elektrodenverdampfereinheit verfügen über einen steuerbaren Speisewasseranschluss, bei denen also der Speisewasserzustrom zu dem Dampfkessel und/oder der Elektrodenverdampfereinheit steuerbar ist. Bei dem Speisewasser kann es sich insbesondere bereits durch andere Prozesse und/oder einen Vorwärmer (Economiser) teilweise bis kurz unterhalb der Sattdampftemperatur erwärmtes Wasser handeln.

Bei geöffneter Fluidverbindung zwischen dem Wasserraum des Dampfkessels und dem der Elektrodenverdampfereinheit stellt sich in den beiden nach dem Prinzip der kommunizierenden Röhre ein identisches Wasserniveau ein. Weiterhin ist für einen Dampfkessel üblicherweise ein Betriebswasserniveau vorgegeben, welches durch geeignet gesteuertes Zuführen von Speisewasser während des Betriebs gehalten wird. Es ist bevorzugt, die wenigstens eine Heizelektrode der Elektrodenverdampfereinheit so auszugestalten, dass sie in dem beschriebenen Zustand der Dampferzeugereinheit während des Betriebs nicht in den Wasserraum der Elektrodenverdampfereinheit ragt.

Wenigstens ein Speisewassereinlass, der Dampfkesselauslass und/oder der Auslass der Elektrodenverdampfereinheit kann eine elektrisch betriebene Heizeinheit zur Erwärmung des hindurchströmenden Mediums aufweisen. Entsprechende Heizeinheiten können bspw. als Heizschwerte ausgeführt sein. Durch die Heizeinheiten lassen sich ggf. kurzzeitig auftretende zu geringe Temperaturen des Speisewassers und/oder des austretenden Dampfes ausgleichen.

Die Dampferzeugereinheit umfasst vorzugsweise eine Steuerungseinrichtung und damit verbundene Sensoren, bspw. zur Temperaturmessung an verschiedenen, vom Fachmann geeignet zu wählenden Orten in der Dampferzeugereinheit und/oder zur Wasserniveaubestimmung im Dampfkessel und/oder der Elektrodenverdampfereinheit.

Im Folgenden wird nun die Funktionsweise der erfindungsgemäßen Dampferzeugereinheit anhand des erfindungsgemäßen Verfahrens erläutert.

Bei einer Dampferzeugung ohne Power-to-heat-Funktion - also ohne dass zusätzlicher Wasserdampf durch die Elektrodenverdampfereinheit erzeugt wird - wird der Wasserdampf allein durch den Dampfkessel auf bekannte Art und Weise aus zugeführtem Speisewasser erzeugt. Das Speisewasser ist dabei regelmäßig durch andere Prozesse und/oder einem Economiser vorgewärmt. Insbesondere kann das Speisewasser eine Temperatur knapp, bspw. 2 Kelvin, unterhalb der Sattdampftemperatur aufweisen.

Erfindungsgemäß ist vorgesehen, dass die Speisewasserzufuhr zum Dampfkessel bei diesem Betriebsmodus über den zweiten Speisewasseranschluss und die Fluidverbindung zwischen den Wasserräumen des Dampfkessels und der Elektrodenverdampfereinheit, die hierfür geöffnet ist, erfolgt. Dies bietet den Vorteil, dass der Wasserraum in der Elektrodenverdampfereinheit stets von Speisewasser durchflossen wird und so eine Temperatur entsprechend der Speisewassertemperatur annimmt.

Der Auslass der Elektrodenverdampfereinheit ist weiter derart eingestellt, dass ein Teil des im Dampfkessel erzeugten Wasserdampfes nicht unmittelbar zu einer nachgeschalteten Anlage, sondern vielmehr durch den Gasraum der Elektrodenverdampfereinheit geführt wird, bevor der durch den Auslass der Elektrodenverdampfereinheit austritt. Um dabei Verluste möglichst gering zu halten, ist bevorzugt, den aus dem Auslass der Elektrodenverdampfereinheit austretenden Wasserdampf einer nachgeschalteten Anlage zur weiteren Verwendung zuzuleiten. Bei der nachgeschalteten Anlage kann es sich insbesondere auch um diejenige Anlage handeln, die mit dem Dampfkesselauslass verbunden ist (bspw. eine Dampfturbine oder ein Wärmetauscher für Fernwärme). Indem der im Dampfkessel erzeugte Wasserdampf teilweise durch den Gasraum der Elektrodenverdampfereinheit geführt wird, werden der Gasraum und die darin angeordnete wenigsten eine Heizelektrode energieeffizient vorgewärmt. Der durch den besagten Gasraum geführte Volumenstrom an Wasserdampf lässt sich über den Strömungswiderstand am Auslass der Elektrodenverdampfereinheit - bspw. über ein dort angeordnetes steuerbares Drosselventil - regeln.

Für eine Dampferzeugung mit Power-to-heat-Funktion, bei der Wasserdampf auch durch die Elektrodenverdampfereinheit erzeugt wird, wird zunächst die Fluidverbindung zwischen den Wasserräumen des Dampfkessels und der Elektrodenverdampfereinheit geschlossen. Die für die anhaltende Erzeugung von Wasserdampf erforderliche Versorgung des Dampfkessels mit Speisewasser erfolgt dann über den ersten Speisewasseranschluss des Dampfkessels. Auch der Auslass der Elektrodenverdampfereinheit wird geschlossen, sodass in der Elektrodenverdampfereinheit erzeugter Wasserdampf über die Fluidverbindung der beiden Gasräume von Dampfkessel und Elektrodenverdampfereinheit in den Dampfkessel und von dort aus weiter durch den Dampfkesselauslass gelangt. Durch die bereits im Dampfkessel erfolgende Vermengung des vom Dampfkessel einerseits und der Elektrodenverdampfereinheit andererseits erzeugten Wasserdampfes kann ein von der tatsächlichen Nutzung der Power-to-heat-Funktion im Wesentlichen gleichbleibender Druck am Auslass des Dampfkessels erreicht werden.

Zur eigentlichen Erzeugung von Wasserdampf durch die Elektrodenverdampfereinheit wird das Wasserniveau in der Elektrodenverdampfereinheit über den zweiten Speisewasseranschluss derart erhöht und somit die Grenze zwischen Gas- und Wasserraum in der Elektrodenverdampfereinheit verschoben, dass die wenigstens eine Heizelektrode in den Wasserraum ragt und bei geeigneter Versorgung der Heizelektrode mit elektrischer Energie Wasserdampf erzeugen kann. Aufgrund des im Betrieb der Dampferzeugereinheit mit Power-to-heat-Funktion erfolgenden Anwärmen sowohl des Gas- als auch des Wasserraums (siehe oben), ist regelmäßig eine zügige, wenn nicht nahezu sofortige Wasserdampferzeugung durch die Elektrodenverdampfereinheit möglich. Dies gilt insbesondere, wenn das Speisewasser beim Einspeisen eine Temperatur nahe der Sattdampftemperatur hat.

Die Dampferzeugung durch die Elektrodenverdampfereinheit lässt sich unmittelbar über das Wasserniveau in der Elektrodenverdampfereinheit regeln, welches sich wiederum einfach über den zweiten steuerbaren Speisewasseranschluss, ggf. auch durch kurzzeitige Öffnung der steuerbaren Verbindung des Wasserraums der Elektrodenverdampfereinheit mit dem Wasserraum des Dampfkessels erreichen lässt. Wird bspw. das Wasserniveau derart abgesenkt, dass die Heizelektrode nicht mehr in den Wasserraum ragt, endet die Wasserdampferzeugung durch die Elektrodenverdampfereinheit unmittelbar.

Um von einer Dampferzeugung mit Power-to-heat-Funktion zu dem Betriebsmodus ohne Power-to-heat-Funktion zu wechseln, werden die steuerbaren Ventile an der Verbindung der Wasserräume von Elektrodenverdampfereinheit und Dampfkessel sowie am Auslass der Elektrodenverdampfereinheit - ggf. nach einer vorhergehenden Angleichung des Wasserniveaus in der Elektrodenverdampfereinheit an das Wasserniveau in dem Dampfkessel - geöffnet.

Die Erfindung wird nun anhand einer bevorzugten Ausführungsform unter Bezugnahme auf die beigefügten Zeichnungen beispielhaft beschrieben. Es zeigen:
- Figur 1:: ein erstes Ausführungsbeispiel einer erfindungsgemäßen Dampferzeugereinheit im Betrieb ohne Power-to-heat-Funktion; und
- Figur 2:: die Dampferzeugereinheit gemäß Figur 1 im Betrieb mit Power-to-heat-Funktion.

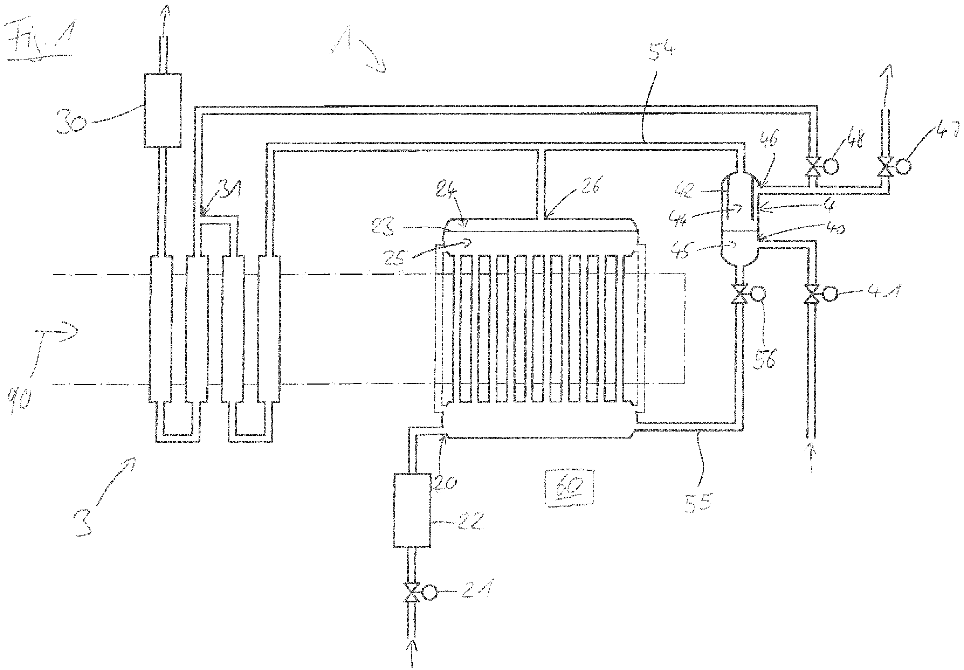

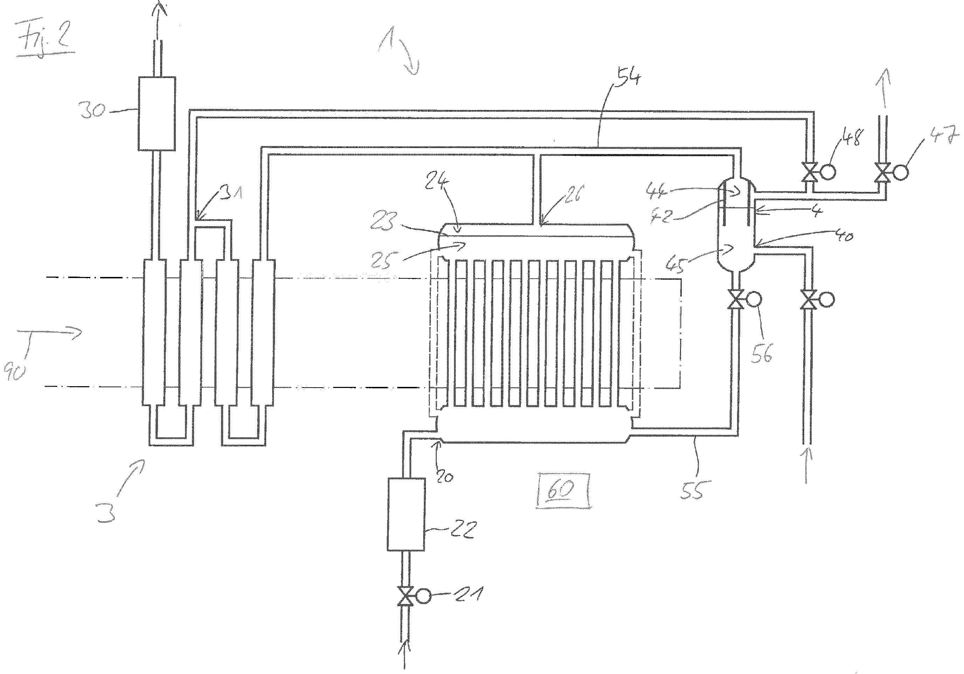

In Figuren 1 und 2 ist ein erstes Ausführungsbeispiel einer erfindungsgemäßen Dampferzeugereinheit 1 in verschiedenen Betriebsmodi dargestellt. Die Dampferzeugereinheit 1 ist als Teil eines GuD-KWK-Kraftwerkes (nicht dargestellt) ausgeführt.

Die Dampferzeugereinheit 1 umfasst einen Dampfkessel mit nachgeschaltetem Überhitzer. Der Dampfkessel ist als Wasserrohrkessel ausgeführt und verfügt über einen ersten, mit Hilfe des steuerbaren Drosselventils 21 steuerbaren Speisewasseranschluss 20. Der Speisewasseranschluss 20 weist weiterhin eine elektrisch betriebene Heizeinheit 22 auf, mit der das Speisewasser vor dem Zufließen in den Dampfkessel noch erwärmt werden kann, falls es nicht die gewünschte Temperatur aufweist. Das Speisewasser kommt von einem Economiser (nicht dargestellt) des GuD-KWK-Kraftwerkes.

Der Dampfkessel wird - ebenso wie die Überhitzer 3 - von dem heißen Abgas einer Gasturbine des GuD-KWK-Kraftwerkes als fluides Heizmedium umströmt, welches seine Wärme an das Wasser im Dampfkessel, damit dieses verdampft, bzw. den Dampf im Überhitzer 3, um die Dampftemperatur zu erhöhen, abgibt. Der von dem heißen Abgas der Gasturbine umströmte Bereich ist in Figur 1 als Strichpunktlinie angedeutet. Die Strömungsrichtung ist durch den Pfeil 90 angegeben.

Dem Dampfkessel wird im Betrieb immer ausreichend Speisewasser zugeführt, dass ein vorgegebenes Betriebswasserniveau 23 eingehalten wird. Das Betriebswasserniveau 23 stellt gleichzeitig die Grenze zwischen Gasraum 24 und Wasserraum 25 des Dampfkessels dar. Während der Wasserraum 25 von Wasser in flüssiger Phase eingenommen wird, befindet sich der Wasserdampf im Gasraum 24.

Im Bereich des Gasraums 24 ist der Dampfkesselauslass 26 vorgesehen, durch den der im Dampfkessel erzeugte Wasserdampf austreten kann, um u.a. zum Überhitzer 3 zu gelangen. Dort wird der Wasserdampf durch das heiße Abgas der Gasturbine weiter erhitzt. Sollte die Erhitzung durch das heiße Abgas nicht ausreichend sein, ist in Strömungsrichtung des Wasserdampfes hinter dem Überhitzer 3 noch eine elektrisch betriebene Heizeinheit 30 vorgesehen, mit dem die Dampftemperatur bei Bedarf erhöht werden kann.

Mit dem Dampfkessel nach dem Prinzip einer kommunizierenden Röhre verbunden ist eine Elektrodenverdampfereinheit 4. Die Elektrodenverdampfereinheit 4 umfasst einen Druckbehälter, der sich ebenfalls in einen Gasraum 44 und einen Wasserraum 45 unterteilen lässt. Es ist jeweils eine Fluidverbindung 54 zwischen dem Gasraum 24 des Dampfkessels und dem Gasraum 44 der Elektrodenverdampfereinheit 4 sowie eine Fluidverbindung 55 zwischen dem Wasserraum 25 des Dampfkessels und dem Wasserraum 45 der Elektrodenverdampfereinheit 4 vorgesehen. Die Fluidverbindung 55 zwischen den beiden Wasserräumen 25, 45 umfasst ein steuerbares Drosselventil 56. Die Fluidverbindung 54 ist ventillos.

Am Gasraum 44 der Elektrodenverdampfereinheit 4 ist weiterhin ein Auslass 46 vorgesehen, von dem aus über ein erstes steuerbares Ventil 47 Wasserdampf - ggf. über einen Abgasentspanner (nicht dargestellt) - an die Umgebung abgegeben oder über ein zweites steuerbares Ventil 48 Wasserdampf dem Überhitzer 3 zugeführt werden kann. Der Auslass 46 ist dabei an einem Einspeisepunkt 31 des Überhitzer 3 verbunden, dass bei vollständig geöffnetem Ventil 48 der Strömungswiderstand vom Gasraum 24 des Dampfkessels über den Gasraum 44 der Elektrodenverdampfereinheit 4 und das Ventil 47 zum Einspeisepunkt 31 am Überhitzer 3 geringer ist als der Strömungswiderstand der direkten Verbindung vom Gasraum 24 des Dampfkessels zu dem Überhitzer 3 bzw. dem Einspeisepunkt 31 des Überhitzers 3. Bei geschlossenem Ventil 47 kann so allein über das Ventil 48 der durch den Gasraum 44 der Elektrodenverdampfereinheit 4 strömende Volumenstrom von aus dem Gasraum 24 des Dampfkessel stammenden Wasserdampfes geregelt werden. Das Ventil 47 dient insbesondere dem Druckausgleich bei einer Befüllung der Dampferzeugereinheit 1 mit Wasser bei zuvor entleertem Dampfkessel, kann aber auch bei zu hohen Kesseldrücken während des Betriebs geöffnet werden.

Die Elektrodenverdampfereinheit 4 weist einen zweiten Speisewasseranschluss 40 auf, der über das Ventil 41 steuerbar ist. Das Speisewasser auch für diesen Speisewasseranschluss 40 stammt von einem nicht dargestellten Economiser des GuD-KWK-Kraftwerks. In der Elektrodenverdampfereinheit 4 sind weiterhin in den Druckbehälter ragende schaltbare Heizelektroden 42 vorgesehen.

Sämtliche steuerbaren Ventile sowie die schaltbaren Heizelektroden 42 werden durch eine Steuereinrichtung 60 gesteuert. Aus Gründen der Übersichtlichkeit sind die jeweiligen Steuerleitungen nicht dargestellt. Gleiches gilt für die diversen Temperatur-, Druck- und Wasserniveausensoren, die für einen Betrieb der Dampferzeugereinheit 1 wie nachfolgend beschrieben erforderlich sind und von einem Fachmann ohne weiteres an dafür erforderlichen und geeigneten Stellen vorgesehen werden. Anhand der Figuren 1 und 2 werden nun zwei unterschiedliche Betriebsmodi der Dampferzeugereinheit 1 - einmal ohne und einmal mit aktivierter Power-to-heat-Funktion - erläutert. Figur 1 zeigt dabei den Betriebsmodus ohne Power-to-heat-Funktion, während bei dem in Figur 2 dargestellten Betriebsmodus die Power-to-heat-Funktion aktiviert ist.

Bei Betrieb ohne Power-to-heat wird Wasserdampf allein aufgrund der in Form von heißen Abgas bzw. einem andern fluiden Heizmedium zugeführten Wärmeenergie erzeugt. So wird Speisewasser auf bekannte Weise zunächst in den Dampfkessel erzeugt und anschließend dessen Temperatur in dem Überhitzer 3 weiter erhöht.

Bei der erfindungsgemäßen Dampferzeugereinheit 1 erfolgt die Zuführung von heißem Speisewasser in dem fraglichen Betriebsmodus jedoch nicht unmittelbar über den Speisewasseranschluss 20 des Dampfkessels, sondern vielmehr über den Speisewasseranschluss 40 der Elektrodenverdampfereinheit 4 und die dafür geöffnete Fluidleitung 55. In anderen Worten wird das Speisewasser über den Wasserraum 45 der Elektrodenverdampfereinheit 4 geleitet bevor es in den Wasserraum 25 des Dampfkessels gelangt. Dadurch wird sichergestellt, dass das im Wasserraum 45 der Elektrodenverdampfereinheit 4 befindliche Wasser im Wesentlichen die Temperatur des Speisewassers aufweist. Da das Speisewasser im vorliegenden Beispiel aus einem Economiser eines GuD-KWK-Kraftwerkes kommt, weist es in der Regel eine Temperatur von ca. 2 Kelvin unterhalb der Sattdampftemperatur auf.

Des Weiteren ist der Auslass 46 der Elektrodenverdampfereinheit 4 und insbesondere das Ventil 48 derart gesteuert, dass ein Teil des aus dem Auslass 26 des Dampfkessels austretenden Wasserdampfes über den Gasraum 44 der Elektrodenverdampfereinheit 4 zum Einspeisepunkt 31 am Überhitzer 3 geleitet wird. Indem sowohl das Speisewasser als auch ein Teil des Wasserdampfes durch die Elektrodenverdampfereinheit 4 geleitet werden, wird diese dauerhaft angewärmt, sodass sie - bei Bedarf - nahezu unmittelbar Wasserdampf erzeugen kann.

Wird mehr Wärmeleistung in Form von Wasserdampf benötigt als durch den Dampfkessel allein bspw. aufgrund einer Reduzierung der Leistung der Gasturbine und daraus resultierend geringerer Wärmemenge im Abgas erzeugt werden kann, wird die Power-to-heat-Funktion der Dampferzeugereinheit 1 aktiviert.

Dazu werden sowohl das Ventil 56 in der Fluidleitung 55 als auch die Ventile 47, 48 am Auslass 46 der Elektrodenverdampfereinheit 4 geschlossen. Das für den Weiterbetrieb des Dampfkessels erforderliche Speisewasser wird über den Speisewasseranschluss 20 des Dampfkessels selbst zugeführt.

Über den Speisewasseranschluss 40 der Elektrodenverdampfereinheit 4 wird das Wasserniveau in deren Druckbehälter so angehoben, dass die Heizelektroden 42 in den Wasserraum 45 ragen. Da durch Schließen des Ventils 56 Elektrodenverdampfereinheit 4 und der Dampfkessel keine kommunizierenden Röhren mehr darstellen, lässt sich das Wasserniveau in der Elektrodenverdampfereinheit 4 problemlos und losgelöst von dem Wasserniveau im Dampfkessel ändern. Aufgrund der zuvor beschriebenen Vorwärmung sowohl des Gas- als auch des Wasserraums 44, 45 in der Elektrodenverdampfereinheit 4 kann bei eingeschalteten Heizelektroden 42 unmittelbar Wasserdampf erzeugt werden. Dieser Wasserdampf gelangt über die Fluidleitung in den Dampfraum 24 des Dampfkessels bzw. vermischst sich unmittelbar mit dem daher stammenden Wasserdampf bevor er in den Überhitzer 3 gelangt.

Zur Regelung der von der Elektrodenverdampfereinheit 4 erzeugten Wasserdampfmenge erfolgt über die Einstellung des Wasserniveaus. Zum Erhöhen des Wasserniveaus und damit zur Erhöhung der Wasserdampferzeugung kann mehr Speisewasser zugeführt werden, zum Absenken des Wasserniveaus kann das Ventil 56 geöffnet werden, womit dann Wasser aus der Elektrodenverdampfereinheit 4 in den Dampfkessel gelangt. Im letztgenannten Fall wird die Speisewasserzufuhr zum Dampfkessel über den Speisewasseranschluss 20 derart reduziert, dass sich im Ergebnis das Wasserniveau im Dampfkessel nicht oder nur innerhalb vorgegebener Grenzwerte verändert.

Zum Abschalten der Wasserdampferzeugung durch die Elektrodenverdampfereinheit 4 wird das Wasserniveau in der Elektrodenverdampfereinheit 4 so abgesenkt, dass die Heizelektroden 4 nicht mehr in den Wasserraum 45 ragen. Sobald das Wasserniveau der Elektrodenverdampfereinheit 4 an dasjenige des Dampfkessels angeglichen ist, kann die Dampferzeugereinheit ohne weiteres in den in Zusammenhang mit Figur 1 erläuterten Betriebsmodus ohne Power-to-heat-Funktion überführt werden.

## Patentansprüche

1. Dampferzeugereinheit (1) mit wahlweise zuschaltbarer Power-to-heat-Funktion umfassend einen Dampfkessel (2) mit Gasraum (24) und Wasserraum (25) zur Erzeugung von Wasserdampf mit Hilfe eines fluiden Heizmediums, wobei Wasser über einen ersten steuerbaren Speisewasseranschluss (20) zugeführt wird und der Wasserdampf durch einen Dampfkesselauslass (26) austritt,
wobei eine Elektrodenverdampfereinheit (4) mit wenigstens einer in einen jeweils einen Gas- und Wasserraum (44, 45) umfassenden Druckbehälter ragenden schaltbaren Heizelektrode (42) vorgesehen ist, **dadurch gekennzeichnet, dass** jeweils die Gas- und Wasserräume (24, 44 bzw. 25, 45) von Dampfkessel (2) und Elektrodenverdampfereinheit (4) miteinander fluidverbunden sind, wobei die Fluidverbindung (55) zwischen den beiden Wasserräumen (25, 45) durch ein Ventil (56) steuerbar ist, der Gasraum (44) der Elektrodenverdampfereinheit einen steuerbaren Auslass (46) umfasst und die Elektrodenverdampfereinheit (4) einen zweiten steuerbaren Speisewasseranschluss (40) aufweist.

2. Dampferzeugereinheit nach Anspruch 1,
wobei der steuerbare Auslass (46) der Elektrodenverdampfereinheit (4) steuerbar mit der Umgebung oder mit einer nachgeschalteten Anlage zur Nutzung des daraus austretenden Wasserdampfes verbindbar ist, wobei der Strömungswiderstand durch den Auslass (46) vorzugsweise beliebig auf einen Wert größer oder kleiner als der Strömungswiderstand durch den Dampfkesselauslass (26) einstellbar ist.

3. Dampferzeugereinheit nach einem der vorhergehenden Ansprüche,
wobei die wenigstens eine schaltbare Heizelektrode (42) derart ausgebildet ist, dass sie bei geöffneter Fluidverbindung (55) zwischen den Gas- und Wasserräumen (25, 45) von Dampfkessel (2) und Elektrodenverdampfereinheit (4) und bei einem für den Dampfkessel (2) vorgegebenen Betriebswasserniveau (23) nicht in den Wasserraum (45) der Elektrodenverdampfereinheit (4) ragt.

4. Dampferzeugereinheit nach einem der vorhergehenden Ansprüche,
wobei wenigstens ein Speisewassereinlass (20, 40), der Dampfkesselauslass (26) und/oder der Auslass der Elektrodenverdampfereinheit (4) eine elektrisch betriebenen Heizeinheit zur Erwärmung des hindurchströmenden Mediums aufweist.

5. Dampferzeugereinheit nach einem der vorhergehenden Ansprüche,
wobei der Dampfkessel (2) ein Wasserrohrkessel ist.

6. Verfahren zum Betrieb einer Dampferzeugereinheit (1) mit Power-to-heat-Funktion gemäß einem der vorhergehenden Ansprüche, wobei
- im Falle einer Dampferzeugung ohne Power-to-heat-Funktion die Speisewasserzufuhr zum Dampfkessel (2) über den Speisewasseranschluss (40) der Elektrodenverdampfereinheit (4) und die Fluidverbindung (55) zwischen den Wasserräumen (25, 45) des Dampfkessels (2) und der Elektrodenverdampfereinheit (4) erfolgt und der Auslass (46) der Elektrodenverdampfereinheit derart eingestellt ist, dass ein Teil des im Dampfkessel (2) erzeugten Wasserdampfes durch den Gasraum (44) der Elektrodenverdampfereinheit (4) zum Auslass (46) gelangt; und
- im Falle einer Dampferzeugung mit Power-to-heat-Funktion sowohl die Fluidverbindung (55) zwischen den Wasserräumen (25, 45) des Dampfkessels (2) und der Elektrodenverdampfereinheit (4) als auch der Auslass (46) der Elektrodenverdampfereinheit (4) geschlossen sind und das Wasserniveau in der Elektrodenverdampfereinheit (4) über den Speisewasseranschluss (40) derart eingestellt wird, dass die wenigstens eine Heizelektrode (42) zur Erzeugung von Wasserdampf in den Wasserraum (45) der Elektrodenverdampfereinheit (4) ragt.

7. Verfahren nach Anspruch 6,
wobei die Wasserdampferzeugung durch die Elektrodenverdampfereinheit (4) über das Wasserniveau in der Elektrodenverdampfereinheit (4) geregelt wird.

8. Verfahren nach Anspruch 6 oder 7,
wobei die Temperatur des Speisewassers bei Einspeisung in den Dampfkessel (2) und/oder die Elektrodenverdampfereinheit (4) nahe der Sattdampftemperatur, vorzugsweise ca. 2 Kelvin unterhalb der Sattdampftemperatur ist.

## Claims

1. Steam generator unit (1) with a power-to-heat function which can be optionally activated, comprising a steam boiler (2) with a gas chamber (24) and a water chamber (25) for generating water vapour using a fluid heating medium, wherein water is fed via a first controllable feed water connection (20), and the water vapour exits through a steam boiler outlet (26),
wherein an electrode vaporizer unit (4) is provided with at least one switchable heating electrode (42) which projects into a pressure vessel which comprises in each case a gas chamber (44) and a water chamber (45), **characterized in that** in each case the gas and water chambers (24, 44 and 25, 45 respectively) of the steam boiler (2) and the electrode vaporizer unit (4) are fluidically connected to one another, wherein the fluidic connection (55) the two water chambers (25, 45) can be controlled by means of a valve (56), the gas chamber (44) of the electrode vaporizer unit comprises a controllable outlet (46), and the electrode vaporizer unit (4) has a second controllable feed water connection (40).

2. Steam generator unit according to Claim 1,
wherein the controllable outlet (46) of the electrode vaporizer unit (4) can be connected in a controllable fashion to the surroundings or to a downstream system for using the water vapor which exits therefrom, wherein the flow resistance through the outlet (46) can be adjusted, preferably in any desired fashion, to a value which is greater than or less than the flow resistance through the steam boiler outlet (26).

3. Steam generator unit according to one of the preceding claims,
wherein the at least one switchable heating electrode (42) is designed in such a way that, when the fluidic connection (55) between the gas and water chambers (25, 45) of the steam boiler (2) and the electrode vaporizer unit (4) is opened and when there is a process water level (23) which is specified for the steam boiler (2), said heating electrode (42) does not project into the water chamber (45) of the electrode vaporizer unit (4).

4. Steam generator unit according to one of the preceding claims,
wherein at least one feed water inlet (20, 40), the steam boiler outlet (26) and/or the outlet of the electrode vaporizer unit (4) have/has an electrically operated heating unit for heating the medium which flows through.

5. Steam generator unit according to one of the preceding claims,
wherein the steam boiler (2) is a water tube boiler.

6. Method for operating a steam generator unit (1) with a power-to-heat function according to one of the preceding claims, wherein
- if steam is generated without a power-to-heat function, the supply water is fed to the steam boiler (2) via the supply water connection (40) of the electrode vaporizer unit (4) and the fluidic connection (55) between the water chambers (25, 45) of the steam boiler (3) and the electrode vaporizer unit (4), and the outlet (46) of the electrode vaporizer unit is set in such a way that a portion of the water vapour which is generated in the steam boiler (2) passes through the gas chamber (44) of the electrode vaporizer unit (4) to the outlet (46) ; and
- if steam is generated with a power-to-heat function, both the fluidic connection (55) between the water chambers (25, 45) of the steam boiler (2) and the electrode vaporizer unit (4) as well as the outlet (46) of the electrode vaporizer unit (4) are closed and the water level in the electrode vaporizer unit (4) is set by means of the supply water connection (40) in such a way that the at least one heating electrode (42) projects into the water chamber (45) of the electrode vaporizer unit (4) in order to generate water vapour.

7. Method according to Claim 6,
wherein the generation of water vapour by the electrode vaporizer unit (4) is regulated by means of the water level in the electrode vaporizer unit (4).

8. Method according to Claim 6 or 7,
wherein the temperature of the supply water, when fed into the steam boiler (2) and/or the electrode vaporizer unit (4), is near to the saturation steam temperature, preferably approximately 2 Kelvin below the saturation steam temperature.

## Revendications

1. Unité formant générateur de vapeur (1), dotée d'une fonction d'électrothermie pouvant être mise en circuit sélectivement, comprenant une chaudière à vapeur (2) dotée d'un volume de gaz (24) et d'un volume d'eau (25) destinés à générer de la vapeur d'eau à l'aide d'un milieu de chauffage fluide, dans laquelle de l'eau est introduite par une première prise d'eau d'alimentation pouvant être commandée (20) et la vapeur d'eau sort par une sortie de chaudière à vapeur (26), dans laquelle est prévue une unité d'évaporation à électrodes (4) dotée d'au moins une électrode de chauffage (42) pouvant être commutée et faisant saillie dans une cuve sous pression comprenant un volume de gaz et un volume d'eau (44, 45), respectivement,
**caractérisée en ce que** les volumes de gaz et d'eau (24, 44 ou 25, 45), respectivement, de la chaudière à vapeur (2) et de l'unité d'évaporation à électrodes (4) sont en communication fluidique les uns avec les autres, dans laquelle la communication fluidique (55) entre les deux volumes d'eau (25, 45) peut être commandée par une vanne (56), le volume de gaz (44) de l'unité d'évaporation à électrodes comprend une sortie pouvant être commandée (46) et l'unité d'évaporation à électrodes (4) présente une deuxième prise d'eau d'alimentation pouvant être commandée (40).

2. Unité formant générateur de vapeur selon la revendication 1, dans laquelle la sortie pouvant être commandée (46) de l'unité d'évaporation à électrodes (4) peut être reliée de manière à pouvoir être commandée à l'environnement ou à une installation en aval destinée à l'exploitation de la vapeur d'eau qui en sort, dans laquelle la résistance à l'écoulement par la sortie (46) est réglable de préférence librement sur une valeur supérieure ou inférieure à la résistance à l'écoulement par la sortie de chaudière à vapeur (26).

3. Unité formant générateur de vapeur selon l'une quelconque des revendications précédentes, dans laquelle ladite au moins une électrode de chauffage pouvant être commutée (42) est réalisée de telle sorte qu'elle ne fait pas saillie dans le volume d'eau (45) de l'unité d'évaporation à électrodes (4) lorsque la communication fluidique (55) entre les volumes de gaz et d'eau (25, 45) de la chaudière à vapeur (2) et de l'unité d'évaporation à électrodes (4) est ouverte et à un niveau d'eau de service (23) prédéfini pour la chaudière à vapeur (2).

4. Unité formant générateur de vapeur selon l'une quelconque des revendications précédentes, dans laquelle au moins une entrée d'eau d'alimentation (20, 40), la sortie de chaudière à vapeur (26) et/ou la sortie de l'unité d'évaporation à électrodes (4) présentent une unité de chauffage à commande électrique pour chauffer le milieu de passage.

5. Unité formant générateur de vapeur selon l'une quelconque des revendications précédentes, dans laquelle la chaudière à vapeur (2) est une chaudière à tubes d'eau.

6. Procédé d'exploitation d'une unité formant générateur de vapeur (1) dotée d'une fonction d'électrothermie selon l'une quelconque des revendications précédentes, dans lequel
- dans le cas d'une génération de vapeur sans fonction d'électrothermie, l'introduction d'eau d'alimentation dans la chaudière à vapeur (2) est effectuée à travers la prise d'eau d'alimentation (40) de l'unité d'évaporation à électrodes (4) et à travers la communication fluidique (55) entre les volumes d'eau (25, 45) de la chaudière à vapeur (2) et de l'unité d'évaporation à électrodes (4), et la sortie (46) de l'unité d'évaporation à électrodes est réglée de telle sorte qu'une partie de la vapeur d'eau générée dans la chaudière à vapeur (2) atteint la sortie (46) en passant par le volume de gaz (44) de l'unité d'évaporation à électrodes (4) ; et
- dans le cas d'une génération de vapeur avec fonction d'électrothermie, à la fois la communication fluidique (55) entre les volumes d'eau (25, 45) de la chaudière à vapeur (2) et de l'unité d'évaporation à électrodes (4) et la sortie (46) de l'unité d'évaporation à électrodes (4) sont fermées et le niveau d'eau dans l'unité d'évaporation à électrodes (4) est réglé par la prise d'eau d'alimentation (40) de telle sorte que ladite au moins une électrode de chauffage (42) fait saillie dans le volume d'eau (45) de l'unité d'évaporation à électrodes (4) pour générer de la vapeur d'eau.

7. Procédé selon la revendication 6, dans lequel la génération de vapeur d'eau par l'unité d'évaporation à électrodes (4) est régulée par le niveau d'eau dans l'unité d'évaporation à électrodes (4).

8. Procédé selon la revendication 6 ou 7, dans lequel la température de l'eau d'alimentation à l'introduction dans la chaudière à vapeur (2) et/ou l'unité d'évaporation à électrodes (4) est proche de la température de vapeur saturée, de préférence égale à environ 2 Kelvin au-dessous de la température de vapeur saturée.
